# EUROPEAN PATENT SPECIFICATION

(11) **EP 4 587 724 B1**
(45) Date of publication and mention of the grant of the patent: **12.08.2026**
(21) Application number: 23785842.8
(22) Date of filing: 18.09.2023
(51) Int. Cl.: F16B 39/22

(54) **REBAR SCREW CONNECTION AND REBAR SCREW CONNECTION FILLER**
BEWEHRUNGSSTABSCHRAUBVERBINDUNG UND BEWEHRUNGSSTABSCHRAUBVERBINDUNGSFÜLLER
RACCORD À VIS DE BARRE D'ARMATURE ET CHARGE DE RACCORDEMENT À VIS DE BARRE D'ARMATURE

(30) Priority: 16.09.2022 NL 2033064
(43) Date of publication of application: 23.07.2025
(73) Proprietor: Panasia Progressive Technology Co., Ltd, Sam Khok Pathumthani, 12160 (TH)
(72) Inventor: TEMSINSOOK, Noppadol, Thanyaburi, Pathumthani 12130 (TH); PESCHEUX, Gustave Francois Anne, 9189 Vichten (LU)
(74) Representative: Arnold & Siedsma
(86) International application number: PCT/IB2023/059237
(87) International publication number: WO 2024/057290

(56) References cited:
- CH-A- 192 197
- CH-A- 260 164
- US-B2- 10 214 668

## Description

The present invention relates to a rebar screw connection.

The invention is further related to a filler and use of said filler for secure rebar screw connections as well as a method of applying or providing a rebar screw connection.

A prior art screw connection may comprise: a female member having a recess with an inner screw thread; a male member having an outer screw thread that is configured to be arranged in mating arrangement with the inner screw thread of the female member; a thread tolerance between the outer screw thread of the male member and the inner screw thread of the female member; and a filler that is configured to fill the thread tolerance.

Every screw connection comprises a thread tolerance, because some play in between the male member and the female member is required to allow the outer screw thread to be inserted into the inner screw thread. This play, although required to allow the screw connection to be made, may also result in negative side effects for particular applications.

For example, the play provided by the thread tolerance may on the one hand result in a screw connection that becomes loose over time, i.e. unscrews. In order to prevent this, prior art thread locks such as the commercially available Loctite^{®} Threadlocker have been developed as filler. Loctite^{®} has been developed to permanent lock of all relatively small metal threaded connections. The thread locker permanently secures and seals bolts, nuts and studs to prevent loosening due to vibration. It is a methacrylate-based locking agent, that permanently locks threaded connections into one piece, by which it prevents loosening of nuts and bolts due to vibration. The Loctite^{®} distributes evenly in a thread gap defining the thread tolerance, and hardens or cures over time. Once cured, the Loctite^{®} defines a tough solid medium, and in order to unscrew the screw connection, this solid medium has to be broken, thereby providing a threshold against unwanted loosening, i.e., unscrewing of the screw connection. Once a torque is applied that is high enough to break the solid medium, it shatters into small pieces. Once broken, new Loctite^{®} needs to be applied in order to reinstate a secured screw connection. Breaking or degrading of the securing properties of the Loctite^{®} however is vulnerable to remain unnoticed, because it is impossible to visually inspect the medium in the thread tolerance. Dynamic load situations, such as in a bolted flange of a wind turbine construction, or due to earthquakes, may cause the solid medium of the thread lock to fail, and possibly result in failure over time if the security is inadequate to withstand future loads.

The publication US 10 214 668 B2 discloses an adhesive composition comprising an epoxy resin, a binder and curing agent. This composition is useful for nuts and bolts, where it is typically disposed on a threaded surface. As with Loctite^{®} discussed above, this composition is cured after application and suffers from similar disadvantages.

On the other hand, the play provided by the thread tolerance may also result in gas leaking through the thread tolerance. In order to prevent such a leakage of gas, gas tapes may be applied as a filler. The gas tape fills the thread gap defining the thread tolerance, and is also for a single use. After all, the thread will cut through the tape during the screwing motion, and consequently new gas tape has to be arranged after unscrewing the screw connection. Gas tape not only prevents against leakage, but also improves the screw connection in the sense that it

A further disadvantage of thread locks and gas tape is that they are in particular suited for relatively small screw connections. However, the above-mentioned bolted flanges of a wind turbine construction may apply bolt connections having a nut size of M72 or even larger. Consequently, also the thread gap that has to be filled by the filler increases in size, and traditional fillers such as the above-mentioned curing thread locks and gas tape are less suitable for these applications.

Document JP S58 13848 A discloses a prior art rebar screw connection comprising a resin and a curing agent.

An objective of the present invention is to provide a rebar screw connection, a filler and use of a filler for secure rebar screw connections that are improved relative to the prior art and wherein at least one of the above stated problems is obviated or alleviated. In particular, there is a need for secure screw connections, that are suitable for relatively large connections and able to securely withstand dynamic load conditions.

Said objective is achieved with the rebar screw connection according to claim 1.

The heterogenous composition of the filler comprises a fluid carrier comprising grease, that distributes and thereby fills the thread tolerance. Contrary to prior art thread locks such as the commercially available Loctite^{®} discussed above, the fluid carrier of the filler remains fluid, i.e. it doesn't cure or harden, and consequently the screw connection may be screwed (i.e. tightened) and unscrewed (i.e. untightened) over and over again without the need to replace the filler. The fluid carrier defines a carrier for solid particles that are suspended in the fluid carrier, and consequently also these suspended solid particles are distributed throughout the thread gap defining the thread tolerance. If the screw connection is tightened, and a pre-tensioning torque is applied, the outer screw thread of the male member and the inner screw thread of the female member will move relative to each other in a longitudinal direction of the male member. As a result, the thread tolerance will be non-symmetrical relative to the thread. More in particular, the pre-tensioning force will press the inner screw thread and the outer screw thread towards each other and thereby locally reduce the thread tolerance between the inner screw thread and the outer screw thread. Consequently, at other locations, the thread tolerance will have to increase. The locally reduced thread tolerance will prevent the solid particles suspended in the filler to easily pass through these narrow thread gaps, and consequently the pre-tensioned screw connection will be able to withstand high and repeating dynamic loads. However, due to the fluid nature of the fluid carrier in the filler, the screw connection may still be unscrewed and reused over and over again.

Summarizing, by applying a filler that is a non-curable heterogeneous composition comprising a fluid carrier and solid particles suspended therein, the present invention provides a screw connection that may be easily applied, also in relatively large screw connections, that is able to withstand high dynamic loads, and moreover may be re-used over and over again.

In contrast, curable compositions cure or harden after being applied and then degrade over time, especially under dynamic load conditions. Compression/decompression cycles of dynamic load conditions cause fracturing, grinding, breaking up of the filler in the thread tolerance while its particles are moreover prevented from rearranging in the thread tolerance during or after exposure to such dynamic conditions. The purpose of the particles to reduce play may therefore be compromised. Further, curable compositions require more complex formulations. In contrast, the non-curable heterogenous composition of the present invention may even contain only the fluid carrier and the solid particles.

Further benefits or inventive effects, are attained according to the present disclosure by the assembly of features in the appended independent claims. Preferred embodiments are the subject of the dependent claims.

In the following description preferred embodiments of the present invention are further elucidated with reference to the drawing, in which:
Figures 1 to 4 are successive schematic views of applying a connection according to a first preferred embodiment; and
Figures 5 to 7 are successive schematic views of applying a connection according to a second preferred embodiment of the invention.

The following reference signs are used throughout.
- 1: screw connection
- 2: female member
- 3: recess
- 4: inner screw thread
- 5, 5a, 5b: male member
- 6: outer screw thread
- 7: filler
- 8: fluid carrier
- 9: solid particles
- 10, 11: opposing faces
- 12: bottom
- 13, 13a, 13b: end face
- 14: coupler
- 15: threaded through hole
- G: thread gap
- G_{c}: compressed thread gap
- ØF: outer diameter of female member
- ØM: outer diameter of male member
- R: screwing motion
- T: thread tolerance

In both embodiments the screw connection 1 comprises a female member 2 having a recess 3 with an inner screw thread 4, as well as a male member 5 having an outer screw thread 6 that is configured to be arranged in mating arrangement with the inner screw thread 4 of the female member 2. It further exhibits a thread tolerance T between the outer screw thread 6 of the male member 5 and the inner screw thread 4 of the female member 2. The screw connection 1 further comprises a filler 7 that is configured to fill the thread tolerance T, wherein the filler 7 is a non-curable heterogeneous composition comprising a fluid carrier 8 and solid particles 9 suspended therein.

The thread tolerance T is defined as the difference in diameter between the outer diameter of the female member ØF and the outer diameter of the male member ØM, i.e. T = ØF - ØM. As the thread tolerance T is calculated by the difference in diameters, the size thereof will be distributed between the opposing sides, resulting in a distance T/2 for each side.

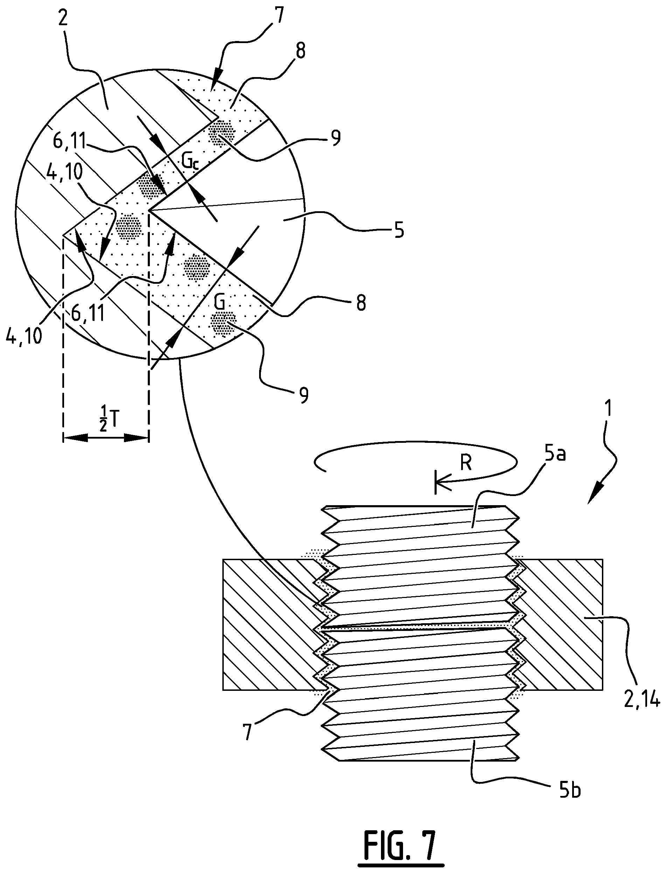

The thread tolerance T results in a thread gap G that is defined as a distance perpendicular to opposing faces 10, 11 of the inner screw thread 4 of the female member 2 and the outer screw thread 6 of the male member 5, respectively (Figure 7). The size of the thread gap G may differ in dependence of a pre-tensioning force applied to the screw connection, as will be explained in more detail below with reference to the detailed view in Figure 7.

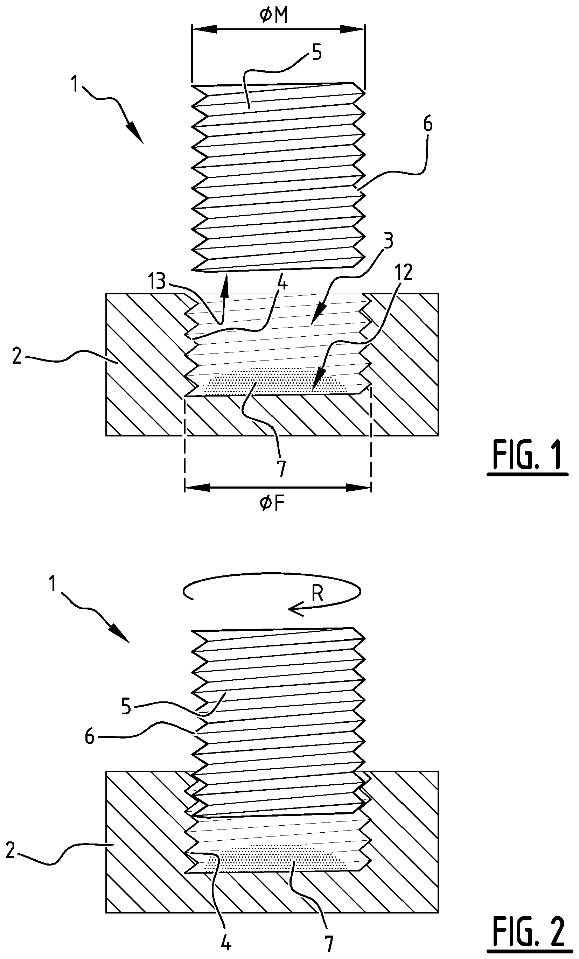

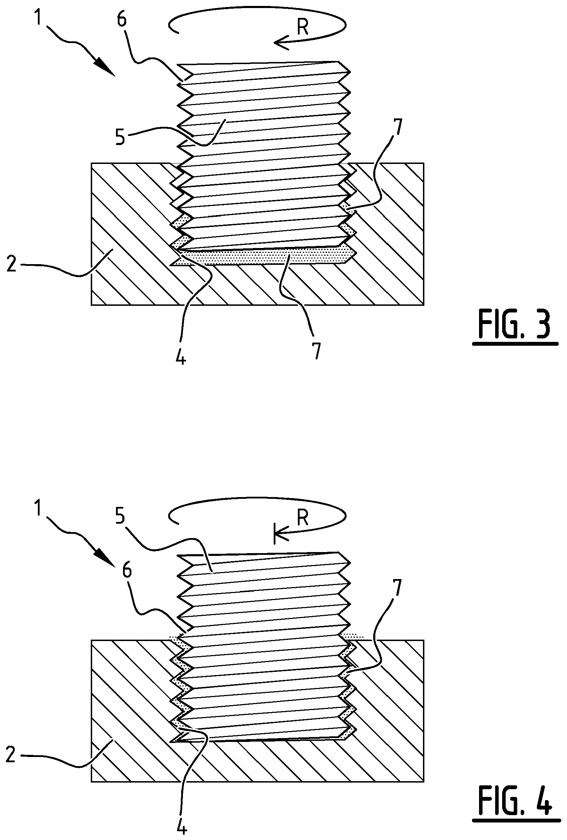

In the first preferred embodiment shown in Figures 1-4, the screw connection 1 comprises a single male member 5 that is screwed into a recess 3 having a bottom 12 that contains the filler 7. Figure 2 shows a situation wherein the male member 5 is already partly screwed into the female member 2. In Figure 3, the male member 5 is screwed even further into the female member 2, and now the end face 13 of the male member 5 has come into contact with the filler 7 on the bottom 12. Due to the screwing motion (indicated by arrow R) of the male member 5, the filler 7 is being forced to distribute in the decreasing volume between the bottom 12 of the female member 2 and the end face 13 of the male member, thereby also forcing the filler 7 into the thread gap G resulting from the thread tolerance T. Figure 4 shows the final situation, wherein the end face 13 of the male member 5 is in tight contact with the bottom 12 of the female member 2, resulting in a pre-tensioned screw connection 1 that allows the filler 7 to reach its desired functionality. This functionality of the filler 7 will be explained in more detail with reference to the second preferred embodiment.

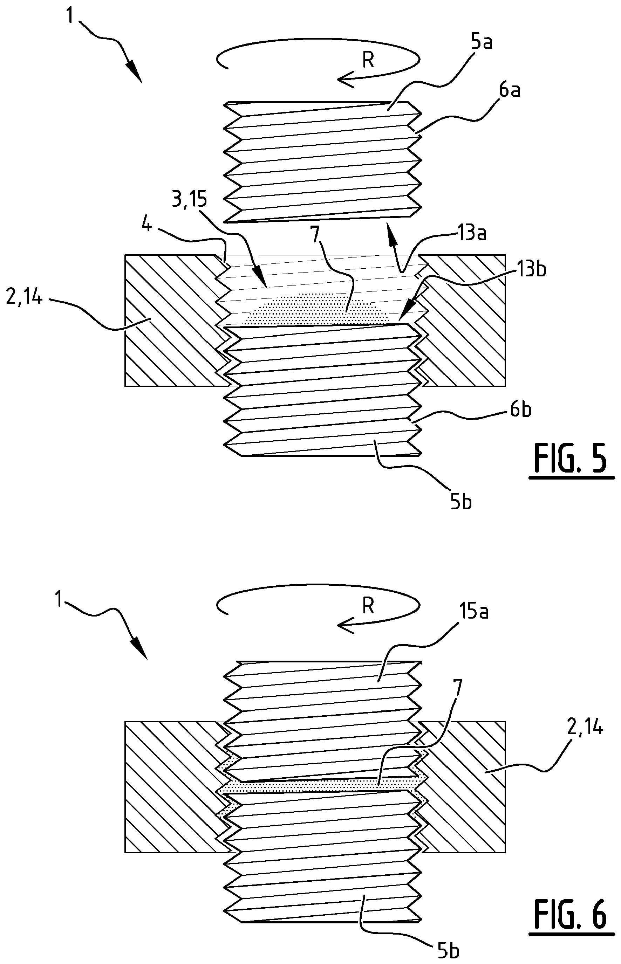

The second preferred embodiment, that is shown in Figures 5-7, is closely related to the first preferred embodiment. Similar reference numbers apply to the similar features. The main difference relative to the first preferred embodiment is that the female member 2 is now a coupler 14 with a recess 3 that is a threaded through hole 15. This embodiment lacks a bottom 12, but is instead designed to receive and couple two male members 5a, 5b, that each comprise a respective end face 13a, 13b. When the end faces 13a, 13b of the male members 5a, 5b are screwed towards each other, the filler 7 that is arranged between these end faces 13a, 13b is - similar to the first preferred embodiment - being forced to distribute in the decreasing volume between the end faces 13a, 13b of the male members 5a, 5b, thereby also forcing the filler 7 into the thread gap G resulting from the thread tolerance T.

As indicated above, the filler 7 is a non-curable heterogeneous composition comprising a fluid carrier 8 and solid particles 9 suspended therein. The detailed view of Figure 7 shows how the pre-tensioned screw connection 1 causes the thread gap G to be compressed on one side (indicated with the suffix "c" of "compressed"). The compressed thread gap G_{c} creates a resistance to the solid particles 9 of the filler 7 to be forced into a through this narrow space between the opposing faces 10, 11, thereby securing the screw connection 1 to effectively withstand dynamic load conditions, such a load conditions caused by earthquakes. For example, the female member 2 may be a coupler 14 that couples mechanical rebars that define the male members 5a, 5b in extremely critical buildings, such as a nuclear power plant. Of course, the invention may be applied to other load critical applications as well, such as in particular in the oil and gas industry. Other dynamic loads may be found in wind turbines.

However, due to the filler 7 being a non-curable heterogeneous composition comprising a fluid carrier 8 and solid particles 9 suspended therein, the screw connection 1 may also be easily disassembled. After all, once the pre-tensioning force is removed by unscrewing the screw connection 1, the thread gap G will not be compressed anymore. This results in the thread gap G to more evenly distribute, thereby providing sufficient space for the solid particles 9 that are suspended in the fluid carrier 8 to move in the thread gap G. The filler 7 being a non-curable heterogeneous composition comprising a fluid carrier 8 and solid particles 9 doesn't require any curing, and consequently it can be disassembled, and - more importantly for safety critical applications - it is able to withstand dynamic loads over and over again. This is contrast to conventional thread lockers (such as Loctite^{®}) that harden and cure and may break under load, wherein this breaking is vulnerable to remain unnoticed, while the resistance to future dynamic loads may be inadequate.

The size of the solid particles 9 is preferably selected in dependency of the thread tolerance T. Particle size may be measured by scattering techniques, such as light scattering. It was found that very small solid particles 9 compared to the thread tolerance T only reduce play to a modest extent, while very large solid particles 9 compared to the thread tolerance T impede flow of the filler 7 into the thread gap G. The solid particles 9 are preferably smaller than the thread tolerance T, though a fraction (e.g. 10 - 20 %) may be larger. Solid particles 9 with a median particle size in the range of 20 - 80 % of the thread tolerance T provide an adequate balance. A particle size distribution of the solid particles 9 is preferably such that most of the solid particles 9 fall in this range. A fraction of smaller and/or larger solid particles 9 outside of this range is acceptable and does not negatively affect the function of the filler 7 or the screw connection 1. Appropriate particle sizes and particle size distributions can be achieved by known technologies such as sizing or sieving.

In a further preferred embodiment, the solid particles 9 have a powder size of Pₛ ≤ T / 4. The size of the solid particles 9, in particular the median particle size, may be in the range of from 0.01 - 50 % of the thread tolerance T, preferably in the range of from 0.1 - 30% of the thread tolerance T. This size gives the flexibility for the filler 7 to be transported through the thread gap G between the inner screw thread 4 and the outer screw thread 6, for example under pressure, and to fix these threads 4, 6 by reducing play.

The solid particles 9 may have a size in the range of from 1 nm - 1000 µm, preferably in the range of from 10 nm - 100 µm, more preferably in the range of from 0.1 - 50 µm. A mix of sizes of the solid particles 9 may be present in the filler 7, for example by providing solid particles 9 in a distribution of particle sizes or by combining multiple particle sizes each having a relatively narrow size distribution. This may suit local and/or temporal variation in the thread tolerance T in the screw connection 1 when screwed or unscrewed. Advantageously, a particle size in a wider range is used, as this may allow a broader application of the filler 7. It is especially advantageous when large screws are being used for wind turbines or as mechanical rebar (i.e. reinforcement bar) screw connections, for example. Preferably, the solid particles 9 are more or less spherically shaped.

In a further embodiment, the screw connection 1 comprises a filler 7 wherein the filler 7 comprises solid particles 9 that are made of an inorganic material.

In a further embodiment, the screw connection 1 comprises a filler 7 wherein the filler 7 comprises solid particles 9 that are made of a non-corroding material. This is advantageous as non-corroding solid particles 9 maintain their particle size better than corroding particles would and that non-corroding material generally does not cause corrosion of the female and male members 2, 5 of the screw connection 1.

In a further embodiment the solid particles 9 are oxides, carbides and/or sulphides of the group of alkali metals, alkaline earth metals, transition metals, basic metals and semi metals, preferably oxides or carbides of the group of alkali metals, alkaline earth metals, transition metals, basic metals and semi metals.

In a further embodiment the solid particles 9 are selected from a group of materials comprising at least CaO, SiO₂, TiO₂, Al₂O₃, MgO, or graphene. It is preferred to use SiO₂ (i.e. silica). Further, cement powder can be used as solid material in the filler. Cement may comprise calcium silicates or at least CaO and SiO₂. Cement is a binder, a substance used for construction that sets, hardens, and adheres to other materials to bind them together. Cement is seldom used on its own, but rather to bind sand and gravel (aggregate) together. Cement mixed with fine aggregate produces mortar for masonry, or with sand and gravel, produces concrete. Concrete is the most widely used material in existence and is behind only water as the planet's most-consumed resource. Cements used in construction are usually inorganic, often lime or calcium silicate based. A type of cement, Portland cement, is by far the most common type of cement in general use around the world. This cement is usually made by heating limestone (calcium carbonate) with other materials (such as clay) to 1,450 °C (2,640 °F) in a kiln, in a process known as calcination that liberates a molecule of carbon dioxide from the calcium carbonate to form calcium oxide, or quicklime, which then chemically combines with the other materials in the mix to form calcium silicates and other cementitious compounds. The resulting hard substance, called 'clinker', is then ground with a small amount of gypsum into a powder to make ordinary Portland cement, the most commonly used type of cement. Portland cement is a basic ingredient of concrete, mortar, and most non-specialty grout. The most common use for Portland cement is to make concrete. Concrete is a composite material made of aggregate (gravel and sand), cement, and water. As a construction material, concrete can be cast in almost any shape, and once it hardens, can be a structural (load bearing) element.

In a further embodiment it is preferred to use cement as source of particles in the filler 7 comprising a non-curable heterogeneous composition comprising a fluid carrier 8 and solid particles 9 suspended therein.

The filler 7 is preferably formulated as a paste in order to stay in the female member 2 of the screw connection prior to screwing the one or two male parts 5, 5a, 5b therein. In a further embodiment the fluid carrier 8 comprises a viscosity, in particular the kinematic viscosity, preferably at 20 °C, in the range of 100 to 4000 centistokes, preferably 150 to 400 centistokes. This viscosity range is preferably maintained over a temperature range of -40 °C to +60 °C, which covers most practical applications of the invention.

The fluid carrier 8 comprises a grease. Examples include synthetic or mineral greases. Other examples include bearing grease or ball bearing lubricants, such as commercially available under the names of Super HT or Arpol 9901. Though these are intended as lubricants for bearings and exhibit low viscosity at elevated temperatures, their viscoelastic properties at ambient temperatures (e.g. a temperature range of -40 °C to +60 °C) have been found to be highly suitable for application with the present invention.

As a practical example, the filler 7 may be composed of such grease as the fluid carrier 8 and cement powder as the solid particles 9. When grease and cement powder are combined, a 1:2 ratio by weight has proven effective, even without further additional components in such a filler 7. A fluid carrier 8 being or comprising grease may also be combined with other solid particles 9 disclosed herein, or a combination of solid particles 9 may employed. The ratio by weight of the fluid carrier 8 to the solid particles 9 may still be 1:2 in that case. More in general, this ratio may be in a range of from 1:0.5 to 1:5, preferably 1:1 to 1:3, more preferably 1:2. More coarse screw threads (i.e. larger thread tolerance T, usually the case with screw threads having a larger pitch) may require relatively more solid particles 9 to fluid carrier 8, while for finer screw threads, a lower amount of solid particles 9 may suffice.

The screw connection 1 is a mechanical rebar screw connection, for example as part of a mechanical rebar splicing system. The female member 2 of the screw connection 1 is a rebar coupler configured to couple at least one mechanical rebar defined by the male member 5, for example as explained in relation to Figures 1 - 4. Additionally or alternatively, the female member 2 may be a rebar coupler configured to connect two mechanical rebars, each defined by a like male member 5, for example as explained in relation to Figures 5-7 with the two male members 5a, 5b.

The present invention is also directed to a filler 7, in particular a rebar screw connection filler, comprising a non-curable heterogeneous composition comprising a fluid carrier 8 and solid particles 9 suspended therein. Preferably, the filler 7 comprises a grease with a viscosity of 100 to 4000 centistokes, more preferably 150 to 400 centistokes, and/or particles comprising at least CaO and SiO₂. Any of the features disclosed above in relation to the filler 7 can also be employed with the filler 7 separately from the screw connection 1. The filler 7 may be provided in a container, such as a squeeze tube with a nozzle, for easy application to components of a screw connection 1.

The present invention is also directed to the use of a filler 7 comprising a non-curable heterogeneous composition comprising a fluid carrier 8 and solid particles 9 suspended therein for securing screw connections against dynamic load conditions. The filler 7 may in particular be used in screw connections that are suitable for relatively large connections and able to securely withstand dynamic load conditions and/or in a mechanical rebar splicing system. Existing mechanical rebar splicing systems may be improved in their capacity to withstand dynamic load conditions by applying the filler 7 in one or more than one thread tolerance T present in screw connections 1 of such a system.

It is contemplated to provide the female member 2 with the filler 7 arranged in the recess as a separate product, which can be used to mechanically connect one or two rebars (e.g. male members 5a, 5b) during construction work. That is, the female member 2 in combination with the filler 7 in any of the disclosed embodiments of the screw connection 1, but without the male member 5, is also disclosed.

Provided is a rebar coupler, for a rebar screw connection 1, in particular a mechanical rebar splicing system, comprising:
- a female member 2 having a recess 3 with an inner screw thread 4 configured to be in mating arrangement with an outer screw thread 6 of a male member 5, in particular a rebar, exhibiting a thread tolerance T between the outer screw thread 6 of the male member 5 and the inner screw thread 4 of the female member 2; and
- a filler 7 arranged inside the recess 3 and configured to fill the thread tolerance T,
wherein the filler 7 is a non-curable heterogeneous composition comprising a fluid carrier 8 and solid particles 9 suspended therein, wherein the fluid carrier 8 comprises grease.

Provided is also a method of applying or providing a rebar screw connection 1 that is preferably secured against dynamic load conditions. This method comprises:
- providing a female member 2 having a recess 3 with an inner screw thread 4;
- providing a male member 5 having an outer screw thread 6 that is configured to be arranged in mating arrangement with the inner screw thread 4 of the female member 2;
- providing a filler 7 configured to fill a thread tolerance T between the outer screw thread 6 of the male member 5 and the inner screw thread 4 of the female member 2, wherein the filler 7 is a non-curable heterogenous composition comprising a fluid carrier 8 and solid particles 9 suspended therein, wherein the fluid carrier comprises grease; and
- arranging the outer screw thread 6 of the male member 5 in mating arrangement with the inner screw thread 4 of the female member 2 and the filler 7 therebetween to obtain the screw connection 1.

This method may comprise providing the rebar screw connection 1 according to any of the embodiments disclosed herein and/or the filler 7 according to any of the embodiments disclosed here. The rebar screw connection 1 obtainable by the method may be secured against dynamic load conditions.

Various screw connections in the form a mechanical rebar coupling (a female member with two mail members according to the second preferred embodiment described above) were subjected to a slip test according to ISO norm 15835-2:2009. Slip was evaluated according to Option 2 of ISO norm 15835-1:2009. Table 1 shows test results for samples with a filler according to the present invention. Table 2 shows test results for comparative samples without filler.

The filler in this particular test was a grease mixed with cement powder at 1:2 weight ratio. The slip test involved subjecting the sample to a tensile force cycling from 0 MPa to 300 MPa, conforming to 60% of the specified characteristic (or nominal) yield strength value of the reinforcement bar, back to 10 MPa at which slip was evaluated. The slip test was performed in three subsequent cycles on sample 2a - 2f of Table 1 to further assess repeated exposure to tensile forces. Samples 1a - 1f were also subjected to

Screw connections with a filler according to the invention exhibit lower slip, which even meets the strict requirements of the above norms of no more than 0.10 mm slip. The larger the nominal diameter of the reinforcement bar (male member), the larger the slip in conventional couplings which therefore generally do not meet the norm. The present invention provides a filler which can be employed to reduce slip in mechanical rebar couplings so that even couplings of bars of larger diameter (e.g. above 25 mm nominal diameter) comply with the ISO norm. Further, even when repeating the slip test three times, slip complies with the norm when the filler is used, indicating that such couplings can cope with cycling exposure or dynamic loads.

**TABLE 1 - Test results of screw connections with filler according to the invention**

| Sample no. | Nominal size, ØM [mm] | **Slip** [mm] cycle 1 | Slip [mm] cycle 2 | Slip [mm] cycle 3 |
|---|---|---|---|---|
| 1a | 32 | 0.03 | | |
| 1b | 32 | 0.07 | | |
| 1c | 32 | 0.03 | | |
| 1d | 32 | 0.07 | | |
| 1e | 32 | 0.04 | | |
| 1f | 32 | 0.03 | | |
| 2a | 40 | 0.02 | 0.01 | 0.01 |
| 2b | 40 | 0.05 | 0.05 | 0.05 |
| 2c | 40 | 0.10 | 0.10 | 0.10 |
| 2d | 40 | 0.09 | 0.09 | 0.10 |
| 2e | 40 | 0.08 | 0.09 | 0.09 |
| 2f | 40 | 0.07 | 0.08 | 0.09 |
| ISO norm | | ≤ 0.10 | ≤ 0.10 | ≤ 0.10 |

**TABLE 2 - Test results of screw connections without filler**

| Sample no. | Nominal size, ØM [mm] | Slip [mm] |
|---|---|---|
| 3a | 25 | 0.08 |
| 3b | 25 | 0.09 |
| 4a | 32 | 0.20 |
| 4b | 32 | 0.17 |
| 5a | 16 | 0.04 |
| 5b | 20 | 0.09 |
| 5c | 25 | 0.13 |
| 5d | 32 | 0.15 |
| 5e | 40 | 0.11 |
| ISO norm | | ≤ 0.10 |

Although they show preferred embodiments of the invention, the above- described embodiments are intended only to illustrate the invention and not to limit in any way the scope of the invention. Accordingly, it should be understood that where features mentioned in the appended claims are followed by reference signs, such signs are included solely for the purpose of enhancing the intelligibility of the claims and are in no way limiting on the scope of the claims. Furthermore, it is particularly noted that the skilled person can combine technical measures of the different embodiments. The scope of protection is defined solely by the following claims.

## Claims

1. Mechanical rebar screw connection (1), comprising:
- a rebar coupler (2, 14) configured to couple at least one mechanical rebar (5) and having a recess (3) with an inner screw thread (4);
- a mechanical rebar (5) having an outer screw thread (6) that is configured to be arranged in mating arrangement with the inner screw thread (4) of the rebar coupler (2, 14);
- a thread tolerance (T) between the outer screw thread (6) of the mechanical rebar (5) and the inner screw thread (4) of the rebar coupler (2, 14); and
- a filler (7) that is configured to fill the thread tolerance (T), **characterised in that** the filler (7) is a non-curable heterogeneous composition comprising a fluid carrier (8) and solid particles (9) suspended therein, wherein the fluid carrier (8) comprises a grease.

2. Mechanical rebar screw connection (1) according to claim 1, wherein the thread tolerance (T) is defined as the difference in diameter between the outer diameter of the rebar coupler (ØF) and the outer diameter of the mechanical rebar (ØM).

3. Mechanical rebar screw connection (1) according to claim 1 or 2, wherein the size of most of the solid particles (9) is smaller than the thread tolerance (T) and the median particle size of the solid particles (9) is in the range of from 0.01 - 50 % of the thread tolerance (T), preferably in the range of from 0.1 - 30% of the thread tolerance (T).

4. Mechanical rebar screw connection (1) according to one or more than one of the foregoing claims, wherein the solid particles (9) have a size in the range of from 1 nm - 1000 µm, preferably in the range of from 10 nm - 100 µm, more preferably in the range of 0.1 - 50 µm.

5. Mechanical rebar screw connection (1) according to one or more than one of the foregoing claims, wherein the solid particles (9) are at least one of:
- spherical;
- made of an inorganic material;
- made of a non-corroding material;
- oxides, carbides and/or sulphides of the group of alkali metals, alkaline earth metals, transition metals, basic metals and semi metals, preferably oxides or carbides of the group of alkali metals, alkaline earth metals, transition metals, basic metals and semi metals; and
- selected from a group of materials comprising at least CaO, SiO₂, TiO₂, Al₂O₃, MgO, or graphene.

6. Mechanical rebar screw connection (1) according to one or more than one of the foregoing claims, wherein the fluid carrier (8) comprises a viscosity in the range of 150 to 400 centistokes.

7. Mechanical rebar screw connection (1) according to one or more than one of the foregoing claims, wherein the rebar coupler (14) is configured to couple two mechanical rebars (5a, 5b).

8. Mechanical rebar screw connection (1) according to one or more than one of the foregoing claims, exhibiting a slip of no more than 0.10 mm as tested in a slip test according to ISO norm 15835-2:2009 and evaluating the slip according to Option 2 of ISO norm 15835-1:2009.

9. Mechanical rebar screw connection (1) according to one or more than one of the foregoing claims, wherein the mechanical rebar (5) has a nominal diameter above 25 mm.

10. Rebar coupler (2, 14) for a mechanical rebar screw connection (1), the rebar coupler (2, 14) having a recess (3) with an inner screw thread (4) configured to couple at least one mechanical rebar (5), with a filler (7) arranged inside the recess (3), **characterised in that** the filler (7) is a non-curable heterogeneous composition comprising a fluid carrier (8) and solid particles (9) suspended therein, wherein fluid carrier (8) comprises a grease.

11. Rebar coupler (2, 14) according to claim 10, wherein the solid particles (9) are spherical.

12. Filler (7) configured to fill a thread tolerance (T) of a mechanical rebar screw connection (1) to secure the mechanical rebar screw connection (1) against dynamic load conditions, **characterised in that** the filler (7) is a non-curable heterogeneous composition comprising a fluid carrier (8) and solid particles (9) suspended therein, wherein the fluid carrier (8) comprises a grease and the solid particles (9) are at least one of:
- oxides and/or sulphides of the group of alkali metals, alkaline earth metals, transition metals, basic metals and semi metals;
- selected from a group of materials comprising at least CaO, SiO₂, TiO₂, Al₂O₃, MgO, or graphene; and
- spherical.

13. Filler (7) according to claim 12, wherein at least one of:
- the solid particles (9) comprise cement powder; and
- the fluid carrier (8) comprises grease with a viscosity of 100 to 4000 centistokes, preferably 150 to 400 centistokes.

14. Use of a filler (7) according to claim 12 or 13, for securing a mechanical rebar screw connection (1) against dynamic load conditions.

15. Method of applying or providing a mechanical rebar screw connection (1) that is preferably secured against dynamic load conditions, the method comprising:
- providing a rebar coupler (2, 14) configured to couple at least one mechanical rebar (5) and having a recess (3) with an inner screw thread (4);
- providing a mechanical rebar (5) having an outer screw thread (6) that is configured to be arranged in mating arrangement with the inner screw thread (4) of the rebar coupler (2);
- providing a filler (7) configured to fill a thread tolerance (T) between the outer screw thread (6) of the mechanical rebar (5) and the inner screw thread (4) of the rebar coupler (2), wherein the filler (7) is a non-curable heterogenous composition comprising a fluid carrier (8) and solid particles (9) suspended therein, wherein the fluid carrier (8) comprises a grease; and
- arranging the outer screw thread (6) of the mechanical rebar (5) in mating arrangement with the inner screw thread (4) of the rebar coupler (2) and the filler (7) therebetween to obtain the screw connection (1), wherein the method preferably comprises providing the mechanical rebar screw connection (1) according to any of the claims 1 - 9 and/or the filler (7) according to any of the claims 12 - 13.

## Patentansprüche

1. Schraubverbindung (1) für einen mechanischen Bewehrungsstab, umfassend:
- eine Bewehrungsstabkupplung (2, 14), die konfiguriert ist, um mindestens einen mechanischen Bewehrungsstab (5) zu koppeln, und eine Aussparung (3) mit einem Innenschraubgewinde (4) aufweist;
- einen mechanischen Bewehrungsstab (5), der ein Außenschraubgewinde (6) aufweist, das konfiguriert ist, um in zusammenpassender Anordnung mit dem Innenschraubgewinde (4) der Bewehrungsstabkupplung (2, 14) angeordnet zu werden;
- eine Gewindetoleranz (T) zwischen dem Außenschraubgewinde (6) des mechanischen Bewehrungsstabs (5) und dem Innenschraubgewinde (4) der Bewehrungsstabkupplung (2, 14); und
- einen Füllstoff (7), der konfiguriert ist, um die Gewindetoleranz (T) zu füllen, **dadurch gekennzeichnet, dass** der Füllstoff (7) eine nicht aushärtbare heterogene Zusammensetzung ist, umfassend einen Fluidträger (8) und darin suspendierte Feststoffpartikel (9), wobei der Fluidträger (8) ein Fett umfasst.

2. Schraubverbindung (1) für einen mechanischen Bewehrungsstab nach Anspruch 1, wobei die Gewindetoleranz (T) als die Differenz in einem Durchmesser zwischen dem Außendurchmesser der Bewehrungsstabkupplung (ØF) und dem Außendurchmesser des mechanischen Bewehrungsstabs (ØM) definiert ist.

3. Schraubverbindung (1) für einen mechanischen Bewehrungsstab nach Anspruch 1 oder 2, wobei die Größe der meisten Feststoffpartikel (9) kleiner als die Gewindetoleranz (T) ist und die mittlere Partikelgröße der Feststoffpartikel (9) in dem Bereich von 0,01-50 % der Gewindetoleranz (T), vorzugsweise in dem Bereich von 0,1-30 % der Gewindetoleranz (T), liegt.

4. Schraubverbindung (1) für einen mechanischen Bewehrungsstab nach einem oder mehr als einem der vorhergehenden Ansprüche, wobei die Feststoffpartikel (9) eine Größe in dem Bereich von 1 nm-1000 µm, vorzugsweise in dem Bereich von 10 nm-100 µm, mehr bevorzugt in dem Bereich von 0,1-50 µm, aufweisen.

5. Schraubverbindung (1) für einen mechanischen Bewehrungsstab nach einem oder mehr als einem der vorhergehenden Ansprüche, wobei die Feststoffpartikel (9) mindestens eines sind von:
- kugelförmig;
- hergestellt aus einem anorganischen Material;
- hergestellt aus einem nicht korrodierenden Material;
- Oxiden, Carbiden und/oder Sulfiden der Gruppe von Alkalimetallen, Erdalkalimetallen, Übergangsmetallen, Basismetallen und Halbmetallen, vorzugsweise Oxiden oder Carbiden der Gruppe von Alkalimetallen, Erdalkalimetallen, Übergangsmetallen, Basismetallen und Halbmetallen; und
- ausgewählt aus einer Gruppe von Materialien, umfassend mindestens CaO, SiO₂, TiO₂, Al₂O₃, MgO oder Graphen.

6. Schraubverbindung (1) für einen mechanischen Bewehrungsstab nach einem oder mehr als einem der vorhergehenden Ansprüche, wobei der Fluidträger (8) eine Viskosität in dem Bereich von 150 bis 400 Centistokes umfasst.

7. Schraubverbindung (1) für einen mechanischen Bewehrungsstab nach einem oder mehr als einem der vorhergehenden Ansprüche, wobei die Bewehrungsstabkupplung (14) konfiguriert ist, um zwei mechanische Bewehrungsstäbe (5a, 5b) zu koppeln.

8. Schraubverbindung (1) für einen mechanischen Bewehrungsstab nach einem oder mehr als einem der vorhergehenden Ansprüche, die einen Schlupf von nicht mehr als 0,10 mm vorweist, wie in einer Schlupfprüfung gemäß ISO-Norm 15835-2:2009 geprüft, und wobei der Schlupf gemäß Option 2 der ISO-Norm 15835-1:2009 bewertet wird.

9. Schraubverbindung (1) für einen mechanischen Bewehrungsstab nach einem oder mehr als einem der vorhergehenden Ansprüche, wobei der mechanische Bewehrungsstab (5) einen Nenndurchmesser von über 25 mm aufweist.

10. Bewehrungsstabkupplung (2, 14) für eine Schraubverbindung (1) für einen mechanischen Bewehrungsstab, wobei die Bewehrungsstabkupplung (2, 14) eine Aussparung (3) mit einem Innenschraubgewinde (4) aufweist, das konfiguriert ist, um mindestens einen mechanischen Bewehrungsstab (5) zu koppeln, mit einem Füllstoff (7), der im Inneren der Aussparung (3) angeordnet ist,
**dadurch gekennzeichnet, dass** der Füllstoff (7) eine nicht aushärtbare heterogene Zusammensetzung ist, umfassend einen Fluidträger (8) und darin suspendierte Feststoffpartikel (9), wobei der Fluidträger (8) ein Fett umfasst.

11. Bewehrungsstabkupplung (2, 14) nach Anspruch 10, wobei die Feststoffpartikel (9) kugelförmig sind.

12. Füllstoff (7), der konfiguriert ist, um eine Gewindetoleranz (T) einer Schraubverbindung (1) für einen mechanischen Bewehrungsstab zu füllen, um die Schraubverbindung (1) für einen mechanischen Bewehrungsstab gegen dynamische Belastungsbedingungen zu sichern, **dadurch gekennzeichnet, dass** der Füllstoff (7) eine nicht aushärtbare heterogene Zusammensetzung ist, umfassend einen Fluidträger (8) und darin suspendierte Feststoffpartikel (9), wobei der Fluidträger (8) ein Fett umfasst und die Feststoffpartikel (9) mindestens eines sind von:
- Oxiden und/oder Sulfiden der Gruppe von Alkalimetallen, Erdalkalimetallen, Übergangsmetallen, Basismetallen und Halbmetallen;
- ausgewählt aus einer Gruppe von Materialien, umfassend mindestens CaO, SiO₂, TiO₂, Al₂O₃, MgO oder Graphen; und
- kugelförmig.

13. Füllstoff (7) nach Anspruch 12, wobei mindestens eines von:
- die Feststoffpartikel (9) Zementpulver umfassen; und
- der Fluidträger (8) Fett mit einer Viskosität von 100 bis 4000 Centistokes, vorzugsweise 150 bis 400 Centistokes, umfasst.

14. Verwendung eines Füllstoffs (7) nach Anspruch 12 oder 13 zum Sichern einer Schraubverbindung (1) für einen mechanischen Bewehrungsstab gegen dynamische Belastungsbedingungen.

15. Verfahren zum Anbringen oder Bereitstellen einer Schraubverbindung (1) für einen mechanischen Bewehrungsstab, die vorzugsweise gegen dynamische Belastungsbedingungen gesichert ist, das Verfahren umfassend:
- Bereitstellen einer Bewehrungsstabkupplung (2, 14), die konfiguriert ist, um mindestens einen mechanischen Bewehrungsstab (5) zu koppeln, und eine Aussparung (3) mit einem Innenschraubgewinde (4) aufweist;
- Bereitstellen eines mechanischen Bewehrungsstabs (5), der ein Außenschraubgewinde (6) aufweist, das konfiguriert ist, um in einer zusammenpassenden Anordnung mit dem Innenschraubgewinde (4) der Bewehrungsstabkupplung (2) angeordnet zu werden;
- Bereitstellen eines Füllstoffs (7), der konfiguriert ist, um eine Gewindetoleranz (T) zwischen dem Außenschraubgewinde (6) des mechanischen Bewehrungsstabs (5) und dem Innenschraubgewinde (4) der Bewehrungsstabkupplung (2) zu füllen, wobei der Füllstoff (7) eine nicht aushärtbare heterogene Zusammensetzung ist, umfassend einen Fluidträger (8) und darin suspendierte Feststoffpartikel (9), wobei der Fluidträger (8) ein Fett umfasst; und
- Anordnen des Außenschraubgewindes (6) des mechanischen Bewehrungsstabs (5) in zusammenpassender Anordnung mit dem Innenschraubgewinde (4) der Bewehrungsstabkupplung (2) und dem Füllstoff (7) dazwischen, um die Schraubverbindung (1) zu erhalten, wobei das Verfahren vorzugsweise das Bereitstellen der Schraubverbindung (1) für einen mechanischen Bewehrungsstab nach einem der Ansprüche 1 bis 9 und/oder des Füllstoffs (7) nach einem der Ansprüche 12 bis 13 umfasst.

## Revendications

1. Raccord à vis (1) de barre d'armature mécanique, comprenant :
- un coupleur de barre d'armature (2, 14) conçu pour coupler au moins une barre d'armature mécanique (5) et ayant un évidement (3) avec un filetage de vis interne (4) ;
- une barre d'armature mécanique (5) ayant un filetage de vis externe (6) qui est conçu pour être disposé selon un agencement d'accouplement avec le filetage de vis interne (4) du coupleur de barre d'armature (2, 14) ;
- une tolérance de filetage (T) entre le filetage de vis externe (6) de la barre d'armature mécanique (5) et le filetage de vis interne (4) du coupleur de barre d'armature (2, 14) ; et
- un agent de remplissage (7) qui est conçu pour remplir la tolérance de filetage (T), **caractérisé en ce que** l'agent de remplissage (7) est une composition hétérogène non durcissable comprenant un support fluide (8) et des particules solides (9) en suspension dans celui-ci, dans lequel le support fluide (8) comprend une graisse.

2. Raccord à vis (1) de barre d'armature mécanique selon la revendication 1, dans lequel la tolérance de filetage (T) est définie comme la différence de diamètre entre le diamètre extérieur du coupleur de barre d'armature (ØF) et le diamètre extérieur de la barre d'armature mécanique (ØM).

3. Raccord à vis (1) de barre d'armature mécanique selon la revendication 1 ou 2, dans lequel la taille de la plupart des particules solides (9) est inférieure à la tolérance de filetage (T) et la taille médiane de particules des particules solides (9) est comprise dans la plage allant de 0,01 à 50 % de la tolérance de filetage (T), de préférence dans la plage allant de 0,1 à 30 % de la tolérance de filetage (T).

4. Raccord à vis (1) de barre d'armature mécanique selon l'une ou plusieurs des revendications précédentes, dans lequel les particules solides (9) ont une taille comprise dans la plage allant de 1 nm à 1 000 µm, de préférence dans la plage allant de 10 nm à 100 µm, plus préférablement dans la plage allant de 0,1 à 50 µm.

5. Raccord à vis (1) de barre d'armature mécanique selon l'une ou plusieurs des revendications précédentes, dans lequel les particules solides (9) ont au moins l'une des caractéristiques suivantes :
- sont sphériques ;
- sont faites d'un matériau inorganique ;
- sont faites d'un matériau non corrosif ;
- sont des oxydes, carbures et/ou sulfures du groupe de métaux alcalins, métaux alcalino-terreux, métaux de transition, métaux de base et semi-métaux, de préférence des oxydes ou des carbures du groupe de métaux alcalins, métaux alcalino-terreux, métaux de transition, métaux de base et semi-métaux ; et
- sont choisies dans un groupe de matériaux comprenant au moins CaO, SiO₂, TiO₂, Al₂O₃, MgO, ou graphène.

6. Raccord à vis (1) de barre d'armature mécanique selon l'une ou plusieurs des revendications précédentes, dans lequel le support fluide (8) comprend une viscosité comprise dans la plage allant de 150 à 400 centistokes.

7. Raccord à vis (1) de barre d'armature mécanique selon l'une ou plusieurs des revendications précédentes, dans lequel le coupleur de barre d'armature (14) est conçu pour coupler deux barres d'armature mécaniques (5a, 5b).

8. Raccord à vis (1) de barre d'armature mécanique selon l'une ou plusieurs des revendications précédentes, présentant un glissement ne dépassant pas 0,10 mm, tel que testé dans un test de glissement selon la norme ISO 15835-2:2009 et évaluant le glissement selon l'option 2 de la norme ISO 15835-1:2009.

9. Raccord à vis (1) de barre d'armature mécanique selon l'une ou plusieurs des revendications précédentes, dans lequel la barre d'armature mécanique (5) a un diamètre nominal supérieur à 25 mm.

10. Coupleur de barre d'armature (2, 14) pour un raccord à vis (1) de barre d'armature mécanique, le coupleur de barre d'armature (2, 14) ayant un évidement (3) avec un filetage de vis interne (4) conçu pour coupler au moins une barre d'armature mécanique (5), avec un agent de remplissage (7) disposé à l'intérieur de l'évidement (3), **caractérisé en ce que** l'agent de remplissage (7) est une composition hétérogène non durcissable comprenant un support fluide (8) et des particules solides (9) en suspension dans celui-ci, dans lequel le support fluide (8) comprend une graisse.

11. Coupleur de barre d'armature (2, 14) selon la revendication 10, dans lequel les particules solides (9) sont sphériques.

12. Agent de remplissage (7) conçu pour remplir une tolérance de filetage (T) d'un raccord à vis (1) de barre d'armature mécanique afin de fixer le raccord à vis (1) de barre d'armature mécanique contre des conditions de charge dynamique, **caractérisé en ce que** l'agent de remplissage (7) est une composition hétérogène non durcissable comprenant un support fluide (8) et des particules solides (9) en suspension dans celui-ci, dans lequel le support fluide (8) comprend une graisse et les particules solides (9) ont au moins l'une des caractéristiques suivantes :
- sont des oxydes et/ou des sulfures du groupe de métaux alcalins, métaux alcalino-terreux, métaux de transition, métaux de base et semi-métaux ;
- sont choisies dans un groupe de matériaux comprenant au moins CaO, SiO₂, TiO₂, Al₂O₃, MgO, ou graphène ; et
- sont sphériques.

13. Agent de remplissage (7) selon la revendication 12, dans lequel au moins l'un de ce qui suit est présent :
- les particules solides (9) comprennent de la poudre de ciment ; et
- le support fluide (8) comprend une graisse avec une viscosité allant de 100 à 4 000 centistokes, de préférence de 150 à 400 centistokes.

14. Utilisation d'un agent de remplissage (7) selon la revendication 12 ou 13, pour fixer un raccord à vis (1) de barre d'armature mécanique contre des conditions de charge dynamique.

15. Procédé destiné à appliquer ou à fournir un raccord à vis (1) de barre d'armature mécanique qui est de préférence fixé contre des conditions de charge dynamique, le procédé comprenant :
- la fourniture d'un coupleur de barre d'armature (2, 14) conçu pour coupler au moins une barre d'armature mécanique (5) et ayant un évidement (3) avec un filetage de vis interne (4) ;
- la fourniture d'une barre d'armature mécanique (5) ayant un filetage de vis externe (6) qui est conçu pour être disposé selon un agencement d'accouplement avec le filetage de vis interne (4) du coupleur de barre d'armature (2) ;
- la fourniture d'un agent de remplissage (7) conçu pour remplir une tolérance de filetage (T) entre le filetage de vis externe (6) de la barre d'armature mécanique (5) et le filetage de vis interne (4) du coupleur de barre d'armature (2), dans lequel l'agent de remplissage (7) est une composition hétérogène non durcissable comprenant un support fluide (8) et des particules solides (9) en suspension dans celui-ci, dans lequel le support fluide (8) comprend une graisse ; et
- la disposition du filetage de vis externe (6) de la barre d'armature mécanique (5) selon un agencement d'accouplement avec le filetage de vis interne (4) du coupleur de barre d'armature (2) et l'agent de remplissage (7) entre ceux-ci, afin d'obtenir le raccord à vis (1), dans lequel le procédé comprend de préférence la fourniture du raccord à vis (1) de barre d'armature mécanique selon l'une quelconque des revendications 1 à 9 et/ou de l'agent de remplissage (7) selon l'une quelconque des revendications 12 à 13.
